# EUROPEAN PATENT APPLICATION

(11) **EP 3 869 581 A1**
(43) Date of publication of application: **25.08.2021**
(21) Application number: 19873553.2
(22) Date of filing: 20.09.2019
(51) Int. Cl.: H01M 2/02, H01G 11/10, H01G 11/78, H01G 11/84, H01M 2/06, H01M 2/10, H01M 2/30

(54) **POWER STORAGE DEVICE, EXTERIOR MEMBER FOR POWER STORAGE DEVICE, POWER STORAGE DEVICE ASSEMBLY, ELECTRIC AUTOMOBILE, AND POWER STORAGE DEVICE PRODUCTION METHOD**

(30) Priority: 15.10.2018 JP 2018194556
(71) Applicant: Dai Nippon Printing Co., Ltd., Shinjuku-ku, Tokyo 162-8001 (JP)
(72) Inventor: FUKUDA, Jun, Tokyo 162-8001 (JP)
(74) Representative: Müller-Boré & Partner Patentanwälte PartG mbB
(86) International application number: PCT/JP2019/037044
(87) International publication number: WO 2020/080039

(57) **Abstract**

The power storage device 10 is constructed by sealing a power storage element 11 inside an outer package member 20 made of a laminated sheet having a heat-adhesive resin layer 38, and is installed in an electric vehicle 1 as a drive source. The outer package member 20 has a peripheral seal section 21 and a housing portion 16 formed to a predetermined depth from the inner edge of the peripheral seal portion 21 and storing the power storage element 11. The power storage device is disposed such that a depth direction (Z direction) of the housing portion 16 and X direction orthogonal to the depth direction are respectively aligned with a front-back direction and a right-left direction of the electric vehicle 1, and Y direction perpendicular to the depth direction (Z direction) and to the X direction of the housing portion 16 is aligned with a height direction of the electric vehicle 1.

## Description

### Technical Field

The present invention relates to electricity storage devices for mounting in electric vehicles and to manufacturing methods therefor. The present invention relates also to electricity storage device outer package members for use in electricity storage devices. The present invention relates further to electricity storage device aggregates and electric vehicles in which electricity storage devices are employed.

### Background Art

Today, from the perspective of environment protection and resources saving, electric vehicles, of which at least part of the driving force is supplied by a motor, have been attracting much attention. Electric vehicles include electric vehicles (EVs), hybrid electric vehicles (HEVs), and plug-in hybrid electric vehicles (PHEVs). Electric vehicles use solely a motor as a driving power source; hybrid electric vehicles and plug-in hybrid electric vehicles use a motor and an engine as a driving power source.

A known electricity storage device for mounting in an electric vehicle is disclosed in Patent Document 1 identified below. This electricity storage device comprises a slim secondary battery in a rectangular shape as seen in a plan view composed of a battery element enclosed in an outer package member. The battery element has a cathode plate and an anode plate arranged opposite each other across a separator, with an electrolyte filling between the cathode and anode plates. The outer package member permits the battery element to be sealed in it as a result of two laminates, each including a metal foil, being bonded together thermally with a thermal adhesive resin layer. Here, terminals connected to the cathode and anode plates respectively protrude out of the outer package member.

A plurality of such electricity storage devices are stacked in their thickness direction and arrayed in the shorter-side direction as seen in a plan view, and thus an assembled battery composed of a plurality of electricity storage devices is formed. A plurality of such assembled batteries are stacked in the thickness direction of the electricity storage devices, and a composite assembled battery composed of a plurality of assembled batteries is mounted beneath the floor of an electric vehicle.

### Citation List

### Patent Literature

Patent Document 1: Japanese Patent registered as No. 3719235 (pages 4-11, Fig. 7).

### Summary of Invention

### Technical Problem

Inconveniently, with the known electricity storage device mentioned above, due to a plurality of electricity storage devices being stacked in the height direction when mounted in the vehicle, the weight of upper electricity storage devices acts on lower electricity storage devices. This may cause the outer package member, which is formed of laminates, to deform; the weight can increase with vibration or the like of the vehicle, and may then cause the outer package member to break. This lessens the reliability of the electricity storage device and of the electric vehicle.

An object of the present invention is to provide an electricity storage device, an electricity storage device aggregate, and an electric vehicle with enhanced reliability. Another object of the present invention is to provide an electricity storage device outer package member for use in an electricity storage device with enhanced reliability, and to provide a method of manufacturing an electricity storage device.

### Solution to Problem

To achieve the above objects, according to one aspect of the present invention, in an electricity storage device that has an electricity storage element sealed in an outer package member formed of a laminate having a thermal adhesive resin layer and that is mounted as a driving source in an electric vehicle, the outer package member includes: a peripheral seal portion; and a housing portion formed with a predetermined depth from the inner edge of the peripheral seal portion, for accommodating in it the electricity storage element. The depth direction of the housing portion and a first direction orthogonal to the depth direction of the housing portion are aligned with the front-rear direction and the left-right direction of the electric vehicle (respectively or the other way around). A second direction orthogonal to the depth direction of the housing portion and to the first direction is aligned with the height direction (top-bottom direction) of the electric vehicle.

According to another aspect of the present invention, in the electricity storage device structured as described above, the dimension of the housing portion in the first direction may be larger than the dimension of the housing portion in the second direction.

According to another aspect of the present invention, in the electricity storage device structured as described above, the dimension of the housing portion in the first direction may be twice to 30 times the dimension of the housing portion in the second direction.

According to another aspect of the present invention, in the electricity storage device structured as described above, a part of the peripheral seal portion extending in the first direction may be bent to overlap a circumferential wall of the housing portion.

According to another aspect of the present invention, in the electricity storage device structured as described above, the machine direction of the outer package member may be orthogonal to the first direction.

According to another aspect of the present invention, in the electricity storage device structured as described above, the electricity storage element may have a first electrode terminal and a second electrode terminal, and the first and second electrode terminals may protrude from parts of the peripheral seal portion extending in the second direction.

According to another aspect of the present invention, in the electricity storage device structured as described above, the first electrode terminal may protrude from one of parts of the peripheral seal portion located opposite from each other in the first direction, and the second electrode terminal may protrude from the other of the parts of the peripheral seal portion located opposite from each other in the first direction.

According to another aspect of the present invention, in an electricity storage device aggregate that has a plurality of electricity storage devices with any of the structured as described above arrayed in the depth direction of the housing portion and accommodated in an outer package case and that is mounted in an electric vehicle, the dimension of the electricity storage device aggregate in the direction in which the plurality of electricity storage devices are arrayed is larger than the dimension of the electricity storage device aggregate in the second direction.

According to another aspect of the present invention, in the electricity storage device aggregate structured as described above, the dimension of the electricity storage device aggregate in the first direction may be larger than the dimension of the electricity storage device aggregate in the direction in which the plurality of electricity storage devices are arrayed.

According to another aspect of the present invention, in the electricity storage device aggregate structured as described above, there may be provided a mount member on which the outer package case is mounted, and the mount member may have a temperature control function.

According to another aspect of the present invention, in the electricity storage device aggregate structured as described above, there may be provided a mount member on which the outer package case is mounted, and the mount member may be formed of a liquid absorbent material.

According to another aspect of the present invention, an electric vehicle includes: an electricity storage device aggregate structured as described above; a driving motor supplied with electric power from the electricity storage device aggregate; and a wheel driven by the driving motor. The electricity storage device aggregate may be arranged in a single tier in the height direction in a bottom part of a vehicle chassis.

According to another aspect of the present invention, in an outer package member for an electricity storage device, for sealing in it an electricity storage element of an electricity storage device to be mounted as a driving source in an electric vehicle, the outer package member is a laminate having a thermal adhesive resin layer and includes: a housing portion having an opening open in one face of it to have a predetermined depth, for accommodating in it the electricity storage element; and a flange portion protruding outward from the circumferential edge of the opening. The dimension of the housing portion in a predetermined first direction on a plane perpendicular to the depth direction of the housing portion is larger than the dimension of the housing portion in a second direction orthogonal to the first direction. The machine direction of the laminate is orthogonal to the first direction.

According to another aspect of the present invention, in the outer package member for an electricity storage device structured as described above, the dimension of the housing portion in the first direction may be twice to 30 times the dimension of the housing portion in the second direction.

According to another aspect of the present invention, a method of manufacturing an electricity storage device to be mounted as a driving source in an electric vehicle includes: a preparation step of preparing an outer package member having a housing portion with a laminate having a thermal adhesive resin layer; and a packing step of packing in the outer package member an electricity storage element accommodated in the housing portion. The depth direction of the housing portion and a first direction orthogonal to the depth direction of the housing portion are aligned with the front-rear direction and a left-right direction of the electric vehicle (respectively or the other way around). A second direction orthogonal to the depth direction of the housing portion and to the first direction is aligned with the height direction of the electric vehicle. The dimension of the housing portion in the first direction is larger than the dimension of the housing portion in the second direction.

According to another aspect of the present invention, in the method of manufacturing an electricity storage device configured as described above, the dimension of the housing portion in the first direction may be twice to 30 times the dimension of the housing portion in the second direction.

According to another aspect of the present invention, in the method of manufacturing an electricity storage device configured as described above, the packing step may include: forming in a peripheral part of the outer package member a peripheral seal portion for sealing the outer package member by thermal bonding with the thermal adhesive resin layer; and bending a part of the peripheral seal portion extending in the second direction such that the part overlaps the circumferential wall of the housing portion.

According to another aspect of the present invention, in the method of manufacturing an electricity storage device configured as described above, the first direction may be orthogonal to the machine direction of the outer package member.

### Advantageous Effects of Invention

According to one aspect of the present invention, an electricity storage device is mounted such that the depth direction of a housing portion of the outer packaging member and a first direction orthogonal to the depth direction are aligned with the front-rear direction and the left-right direction of an electric vehicle (respectively or the other way around), and such that a second direction orthogonal to the depth direction of the housing portion and to the first direction is aligned with the height direction of the electric vehicle. Thus, it is possible to mount a plurality of electricity storage devices without stacking them in the electric vehicle and supply it with the desired electric power. It is thus possible to prevent breakage of the outer packaging member due to increased weight resulting from stacking, and to enhance the reliability of the electricity storage device, the electricity storage device aggregate, and the electric vehicle.

According to another aspect of the present invention, an outer packaging member for an electricity storage device is formed of a laminate, and has a housing portion and a flange portion. The dimension of the housing portion in a first direction on a plane perpendicular to the depth direction of the housing portion is larger than its dimension in a second direction orthogonal to the first direction, and the machine direction of the laminate is orthogonal to the first direction. Thus, it is possible to reduce pinholes and cracks in the outer packaging member for an electricity storage device when the flange portion is thermally bonded to form a peripheral seal portion and a part of the peripheral seal portion extending in the first direction is bent. It is thus possible to enhance the yields of the electricity storage device.

### Brief Description of Drawings

Fig. 1 is a side view of an electric vehicle according to a first embodiment of the present invention;
Fig. 2 is a top view of an electric vehicle according to the first embodiment of the present invention;
Fig. 3 is a perspective view of an electricity storage device pack on an electric vehicle according to the first embodiment of the present invention;
Fig. 4 is an exploded perspective view of an electricity storage device on an electric vehicle according to the first embodiment of the present invention;
Fig. 5 is a sectional side view of an electricity storage device on an electric vehicle according to the first embodiment of the present invention;
Fig. 6 is a sectional view of a packing material in an outer package member for an electricity storage device on an electric vehicle according to the first embodiment of the present invention;
Fig. 7 is an exploded perspective view of an electricity storage device on an electric vehicle according to a second embodiment of the present invention;
Fig. 8 is a sectional side view of an electricity storage device on an electric vehicle according to the second embodiment of the present invention;
Fig. 9 is a sectional side view of an electricity storage device, in a state enclosed in a protective cover, on an electric vehicle according to the second embodiment of the present invention;
Fig. 10 is a sectional side view of an electricity storage device, in a state enclosed in another protective cover, on an electric vehicle according to the second embodiment of the present invention;
Fig. 11 is an exploded perspective view of an electricity storage device on an electric vehicle according to a third embodiment of the present invention; and
Fig. 12 is a top view of an electric vehicle according to a fourth embodiment of the present invention.

### Description of Embodiments

### < First Embodiment >

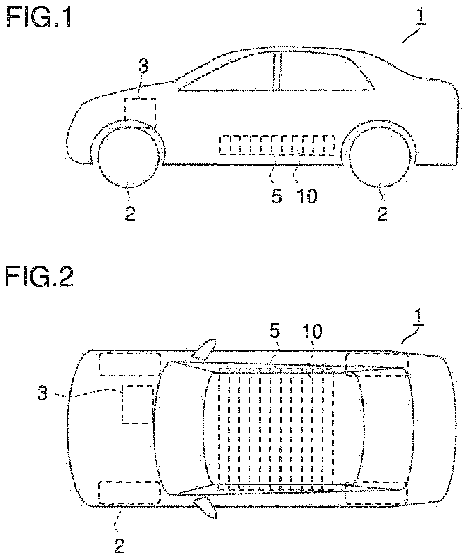

Embodiments of the present invention will be described below with reference to the accompanying drawings. Figs. 1 and 2 are a side view and a top view, respectively, of an electric vehicle 1 according to a first embodiment. The electric vehicle 1 includes a driving motor 3 as a driving power source for driving wheels 2. Beneath the floor of the chassis of the electric vehicle 1, an electricity storage device pack 5 (electricity storage device aggregate) is mounted as a driving source for supplying the driving motor 3 with electric power.

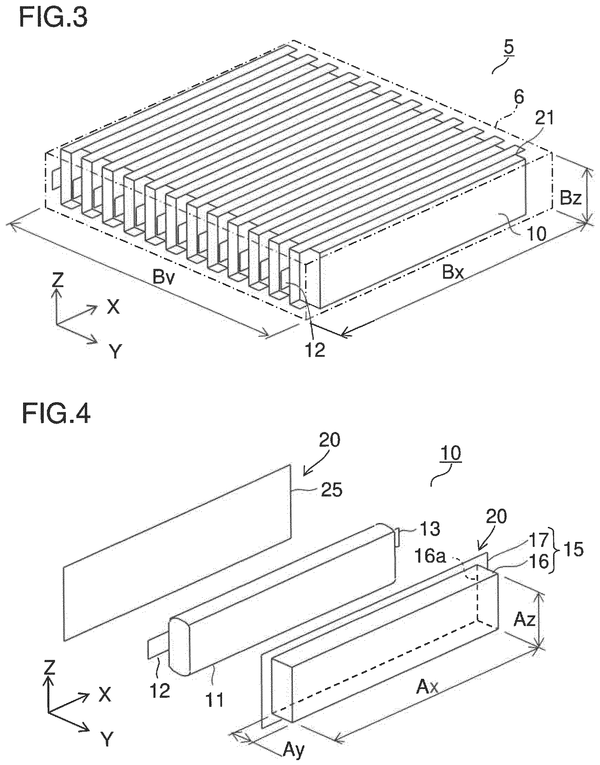

Fig. 3 is a perspective view of the electricity storage device pack 5. The electricity storage device pack 5 has a plurality of electricity storage devices 10 arrayed and enclosed in an outer package case 6. The electricity storage device pack 5 may be built by arraying a plurality of electricity storage device modules each having a plurality of electricity storage devices 10 packed together.

The electricity storage devices 10 are each provided with a cathode electrode terminal 12 and an anode electrode terminal 13, both made of metal. Their electrode terminals 12 and 13 are electrically interconnected in predetermined order, and a pair of connection terminals (not shown) protrudes out of the outer package case 6.

The outer package case 6 is formed of a laminate having a thermal adhesive resin layer, a metal foil, and a base layer laid on each other. The space between the electricity storage devices 10 and the outer package case 6 is filled with a filling material (not shown), and the outer package case 6 is sealed by the thermal adhesive resin layer being bonded thermally.

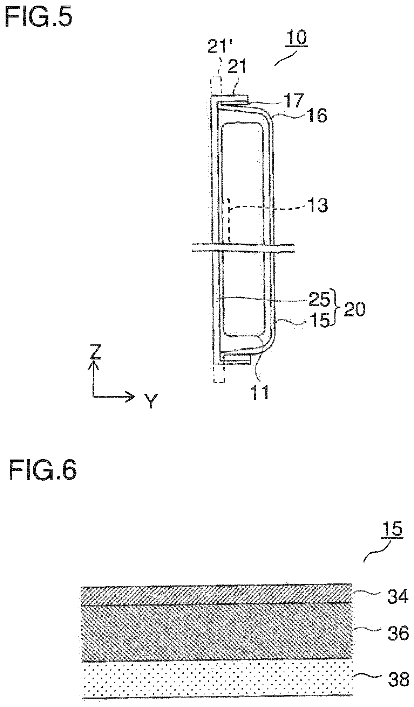

Figs. 4 and 5 are an exploded perspective view and a sectional side view, respectively, of the electricity storage device 10. The electricity storage device 10 comprises a secondary battery having an electricity storage element 11 sealed in an outer package member 20. Usable as the electricity storage device 10 is, for example, a lithium-ion battery, a lithium-polymer battery, an all solid lithium-ion battery, a lead storage battery, a nickel-hydride storage battery, a nickel-cadmium storage battery, a nickel-iron storage battery, a nickel-zinc storage battery, a silver oxide-zinc storage battery, a metal-air battery, or a polyvalent cation battery.

The electricity storage element 11 is formed by arranging a cathode plate and an anode plate (neither is shown) opposite each other across an electrically insulating separator (not shown). To the cathode and anode plates, electrode terminals 12 and 13 are connected respectively. The electricity storage element 11 can be formed by winding up a separator, a cathode plate, and an anode plate, all in an elongate form. The electricity storage element 11 can instead be formed by laying on each other a cathode plate, a separator, an anode plate, and a separator, all in a sheet form, in this order in a plurality of tiers. The electricity storage element 11 may instead be formed by folding up and thereby laying on each other a separator, a cathode plate, and an anode plate, all in an elongate form.

Between the cathode plate and the anode plate, an electrolyte is arranged. In this embodiment, the electrolyte is an electrolytic solution, and fills the inside of the outer package member 20. As the electrolyte, a solid electrolyte or a gel electrolyte may be used.

The outer package member 20 is composed of a packing material 15 (first packing material) and a packing material 25 (second packing material) each having a thermal adhesive resin layer 38 (see Fig. 6) on the inner face.

Fig. 6 is a sectional view showing the layered structure of the packing material 15. The packing material 25 has the same layered structure as the packing material 15. The packing materials 15 and 25 are each formed by laying on each other a base layer 34, a barrier layer 36, and the thermal adhesive resin layer 38 in this order. The packing materials 15 and 25 are preferably given a thickness of 50 µm or more with consideration given to mechanical strength, but 400 µm or less with consideration given to weight reduction in the electricity storage device 10.

The base layer 34 has an electrically insulating property, and is formed of resin film such as of nylon, polyester, or polyethylene terephthalate. The thickness of base layer 34 is , for example, 10 µm or more but 75 µm or less. For enhanced heat resistance, the base layer 34 is preferably formed of a uniaxially stretched film or a biaxially stretched film.

For enhanced pinhole resistance, enhanced electrical insulation, and the like, the base layer 34 may be formed by laying on each other a plurality of resin films of different materials. In that case, the plurality of resin films are bonded together with polyurethane-based or acrylic adhesive. In this embodiment, the base layer 34 is formed by laying together polyethylene terephthalate (with a thickness of 12 µm) and nylon (with a thickness of 15 µm) with adhesive (with a thickness of 4 µm).

The barrier layer 36 is formed of a metal foil, and prevents entry of moisture, oxygen, light, and the like. Examples of the metal for forming the barrier layer 36 include aluminum, aluminum alloys, stainless steel, and titanium. The thickness of the barrier layer 36 is , for example, 10 µm to 300 µm. The base layer 34 and the barrier layer 36 are bonded together with polyurethane-based, acrylic, or other adhesive (not shown). In this embodiment, the barrier layer 36 is formed of an aluminum foil with a thickness of 40 µm.

The thermal adhesive resin layer 38 may be formed of any resin that exhibits thermal adhesion, and is formed of a thermally adhesive resin such as polypropylene, acid-modified polypropylene, low-density polyethylene, or straight-chain low-density polyethylene. The thermal adhesive resin layer 38 may be formed by laying on each other a plurality of resin layers of different materials. The thickness of the thermal adhesive resin layer 38 is, for example, 10 µm or more but 100 µm or less. The thermal adhesive resin layer 38 is formed by extrusion over the barrier layer 36. A film with which to form the thermal adhesive resin layer 38 may be bonded over the barrier layer 36 with adhesive.

In this embodiment, the thermal adhesive resin layer 38 is formed by extruding acid-modified polypropylene (with a thickness of 40 µm) and polypropylene (with a thickness of 40 µm) in this order over the barrier layer 36.

In Figs. 4 and 5, the packing material 25 is formed in the form of a rectangular sheet. The packing material 15 has a housing portion 16 and a flange portion 17. The housing portion 16 has a substantially rectangular opening 16a open in one face, where the electricity storage element 11 is accommodated. The flange portion 17 is formed in an annular shape protruding outward from the circumferential edge of the opening 16a.

Of the thermal adhesive resin layers 38 (see Fig. 6) on the flange portion 17 and the packing material 25, those parts which face each other are thermally bonded together to form an annular peripheral seal portion 21 (see Fig. 5) along the circumference of the housing portion 16. Thus, the housing portion 16 is formed so as to have a predetermined depth from the inner edge of the peripheral seal portion 21, and is sealed by the peripheral seal portion 21.

The packing material 15 is formed by sheet molding so as to have the housing portion 16 recessed with a predetermined depth from the flange portion 17. Here, the housing portion 16 is formed substantially in a rectangular shape extending in one direction on a plane perpendicular to its depth direction.

The depth of the housing portion 16 is determined with consideration given to the thickness of the barrier layer 36 so that no cracks or the like develop during molding. In this embodiment, while the barrier layer 36 has a thickness of 40 µm, the housing portion 16 is formed with a depth of 5 mm to 10 mm. Here, each corner of the housing portion 16 on a plane perpendicular to its depth direction has a radius of, for example, about 3 mm, and each corner of the housing portion 16 on a plane parallel to its depth direction has a radius of, for example, about 1.5 mm. Incidentally, increasing the thickness of the barrier layer 36 permits the housing portion 16 to be formed with a thickness of, for example, 5 mm to 30 mm.

The electricity storage device 10 is mounted such that the depth direction (Y direction) of the housing portion 16 is aligned with the front-rear direction of the electric vehicle 1, and such that, of the housing portion 16 as seen on a plane orthogonal to its depth direction, the longer-side direction (X direction, first direction) is aligned with the left-right direction of the electric vehicle 1 and the shorter-side direction (Z direction, second direction) is aligned with the height direction of the electric vehicle 1. That is, X direction, which is orthogonal to the depth direction of the housing portion 16, is aligned with the left-right direction of the electric vehicle 1, and Z direction, which is orthogonal to the depth direction of the housing portion 16 and to X direction), is aligned with the height direction of the electric vehicle 1.

Since the housing portion 16 is formed by sheet molding, it is difficult to increase its depth. On the other hand, it is easier to increase the dimensions Ax and Az of the housing portion 16 in two directions orthogonal to each other on a plane perpendicular to the depth direction than to increase the dimension Ax of the housing portion 16 in the depth direction. Accordingly, aligning the depth direction (Y direction) of the housing portion 16 with the front-rear direction of the electric vehicle 1 permits a plurality of electricity storage devices 10 to be mounted without being stacked in the electric vehicle 1 to supply it with the desired electric power. It is thus possible to prevent breakage of the outer package member 20 due to the increased weight resulting from stacking, and thereby to enhance the reliability of the electricity storage device 10.

In addition, in a case where the electrolyte is an electrolytic solution, stacking electricity storage devices 10 in the depth direction (Y direction) of the housing portion 16 causes the packing material 25 to yield under increased weight, driving the electrolytic solution to a peripheral region. This results in a shortage of the electrolytic solution in a central region, and reduces the energy density of the electricity storage device 10. Thus, aligning the depth direction (Y direction) of the housing portion 16 with the front-rear direction helps prevent a drop in the energy density of the electricity storage device 10.

Moreover, aligning the shorter-side direction (Z direction), which is perpendicular to the depth direction of the housing portion 16, with the height direction helps reduce the height of the electricity storage device 10 and enhance the interior comfort of the electric vehicle 1. Here, since the housing portion 16 is elongate in X direction with the dimension Ax in X direction larger than the dimension Az in Z direction, it is possible to obtain an electricity storage device 10 with a suppressed height combined with a high capacity.

The dimension Ax of the housing portion 16 in X direction is made twice to 30 times the dimension Az in Z direction. With the dimension Ax less than twice the dimension Az, the electricity storage device 10 has a low capacity. Making the dimension Ax twice or more as large as the dimension Az helps give the electricity storage device 10 a high capacity. However, with the dimension Ax more than 30 times the dimension Ax, the packing material 15 is difficult to mold, leading to low yields. Making the dimension Ax 30 times or less the dimension Az helps enhance the yields of the packing material 15 during molding.

Parts of the peripheral seal portion 21 that extend in X direction protrude in Z direction as indicated by dash-and-dot lines 21' during thermal bonding; after thermal bonding, those parts are bent to overlap the circumferential wall of the housing portion 16. This helps further reduce the height of the electricity storage device 10.

Here, the machine direction (MD) of the packing materials 15 and 25, each formed of a laminate, is aligned with Z direction (orthogonal to X direction). Bending a laminate in a direction parallel to the machine direction tends to produce cracks in a metal foil and pinholes in a resin film. With the machine direction of the packing materials 15 and 25 orthogonal to X direction, it is possible, when bending parts of the peripheral seal portion 21 extending in X direction, to suppress development of cracks and pinholes in the outer package member 20.

The machine direction (MD) of the packing materials 15 and 25 corresponds to the rolling direction (RD) of the metal foil (such as a foil of an aluminum alloy) of the barrier layer 36. The TD (transverse direction) of the packing materials 15 and 25 corresponds to the TD of the metal foil. It is possible to discriminate the rolling direction (RD) of the metal foil based on rolling traces.

On the other hand, it is possible to inspect, on a plurality of sectional planes, the thermal adhesive resin layer 38 in the packing materials 15 and 25 under an electron microscope to recognize a sea-island structure in order to identify as the MD the direction parallel to the sectional plane which has the maximum value of the average diameter of islands in the direction perpendicular to the thickness direction of the thermal adhesive resin layer 38. This method serves to identify the MD in a case where the MD of the packing materials 15 and 25 cannot be identified based on rolling marks on the metal foil.

Specifically, the thermal adhesive resin layer 38 is inspected to recognize a sea-island structure under an electron microscope on each of the following sectional planes (a total of 10 sectional planes): one along the length direction of the thermal adhesive resin layer 38 followed by those each forming an angle of 10 degrees from the previous one up to one perpendicular to the one along the length direction. Then for each island on each sectional plane, the diameter d of the island defined by a straight-line distance between opposite ends in the direction perpendicular to the thickness direction of the thermal adhesive resin layer 38 is measured. Next, for each sectional plane, the average of the 20 greatest island diameters d is calculated. The direction parallel to the sectional plane with the greatest average of island diameters d is identified as the MD.

The electrode terminals 12 and 13 protrude from parts of the peripheral seal portion 21 extending in Z direction and located opposite from each other in the X direction. This helps further reduce the height of the electricity storage device 10. The cathode electrode terminal 12 protrudes from one, and the anode electrode terminal 13 protrudes from the other, of parts of the peripheral seal portion 21 located opposite from each other. Arranging the electrode terminals 12 and 13 close to each other invites a sharp rise in temperature near the electrode terminals 12 and 13, and makes the electricity storage device 10 more prone to aging degradation. Arranging the electrode terminals 12 and 13 away from each other in X direction helps suppress aging degradation of the electricity storage device 10.

The electricity storage device 10 is manufactured through a process of preparing a molded outer package member 20 followed by a packing process of packing the electricity storage element 11 with the outer package member 20. As necessary, the packing process is followed by a bending process.

In a molding process of molding the outer package member 20, a laminate in the form of a roll is cut at a predetermined length, and then by cold forming, the housing portion 16 is formed so as to be recessed relative to the flange portion 17 to obtain the packing material 15. Here, the packing materials 15 and 25 are formed with the machine direction (MD) of the roll-form laminate aligned with Z direction. The outer package member 20 may be prepared by a molding process, or the outer package member 20 may be prepared by procuring a molded outer package member 20.

In the packing process, with the electrode terminals 12 and 13 arranged on the flange portion 17, the electricity storage element 11 is accommodated in the housing portion 16, and the housing portion 16 is filled with an electrolytic solution. Next, the packing material 25 is thermally bonded to the flange portion 17 of the packing material 15 to form the peripheral seal portion 21 around the circumference of the housing portion 16, and the housing portion 16 is sealed. Thus, the electricity storage element 11 is packed in the outer package member 20.

In the bending process, parts of the peripheral seal portion 21 extending in X direction orthogonal to the machine direction of the laminate are bent to overlap the circumferential wall of the housing portion 16.

In Fig. 3 referred to previously, the electricity storage device pack 5 is formed by arraying a plurality of electricity storage devices 10 in Y direction, and is mounted in a single tier in the height direction in the electric vehicle 1. A plurality of electricity storage device packs 5 may be, in a form arrayed in X or Y direction, mounted in the electric vehicle 1.

The dimension Bz of the electricity storage device pack 5 in Z direction is made approximately equal to the dimension Az of the housing portion 16 of the electricity storage device 10 in the Z direction. The dimension Bx of the electricity storage device pack 5 in X direction is made approximately equal to the dimension of the electricity storage device 10 in X direction. Since electricity storage devices 10 are arrayed in Y direction, the dimension By of the electricity storage device pack 5 in Y direction is larger than its dimension Bz in Z direction.

In a case where the electric vehicle 1 is of a sedan type or a compact car type, the height of the electricity storage device pack 5 (its dimension Bz in Z direction) is made, for example, 100 mm or less. In a case where the electric vehicle 1 is of an SUV type or a one-box type, the height of the electricity storage device pack 5 (its dimension Bz in Z direction) is made, for example, 150 mm or less.

While the dimension By of the electricity storage device pack 5 in Y direction varies with the number of electricity storage devices 10, the dimension Bx in X direction is preferably made larger than the dimension By in Y direction. It is thus possible to reduce the number of electricity storage devices 10 and obtain a high-capacity electricity storage device pack 5.

In this embodiment, the electricity storage device 10 is mounted such that the depth direction (Y direction) of the housing portion 16 of the outer package member 20 aligned with the front-rear direction of the electric vehicle 1; such that X direction (first direction), which is orthogonal to the depth direction of the housing portion 16, is aligned with the left-right direction of the electric vehicle 1; and such that Z direction (second direction), which is orthogonal to the depth direction of the housing portion 16 and to the X direction, is aligned with the height direction of the electric vehicle 1. That is, X direction (first direction) and Z direction (second direction), which are orthogonal to each other on a plane perpendicular to the depth direction of the housing portion 16, are aligned with the left-right direction and the height direction, respectively, of the electric vehicle 1.

Thus, it is possible, without stacking a plurality of electricity storage devices 10, to mount them in the electric vehicle 1 to supply it with the desired electric power. It is thus possible to prevent breakage of the outer package member 20 due to the increased weight resulting from stacking, and thereby to enhance the reliability of the electricity storage device 10. In addition, in a case where the electricity storage device 10 contains an electrolytic solution, it is possible to arrange it such that the depth direction (Y direction) of the housing portion 16 is aligned with the front-rear direction, and thereby to prevent a drop in the energy density of the electricity storage device 10.

So that the shorter-side direction (Z direction) on a plane perpendicular to the depth direction of the housing portion 16 is aligned with the height direction, the dimension Ax of the housing portion 16 in X direction is larger than its dimension Az in the Z direction. It is thus possible to reduce the height of the electricity storage device 10 and enhance the interior comfort of the electric vehicle 1, and to obtain a high-capacity electricity storage device 10.

The dimension Ax of the housing portion 16 in X direction is twice to 30 times its dimension Ax in Z direction. It is thus possible to obtain a high-capacity electricity storage device 10, and to enhance the yields of the outer package member 20.

Parts of the peripheral seal portion 21 extending in X direction are bent to overlap the circumferential wall of the housing portion 16, and this helps further reduce the height of the electricity storage device 10.

The machine direction of the packing materials 15 and 25 is orthogonal to X direction. It is thus possible, when parts of the peripheral seal portion 21 extending in X direction are bent, to prevent cracks and pinholes developing in the outer package member 20.

The electrode terminals 12 and 13 protrude from parts of the peripheral seal portion 21 extending in Z direction. This helps further reduce the height of the electricity storage device 10.

The electrode terminal 12 protrudes from one, and the electrode terminal 13 protrudes from the other, of parts of the peripheral seal portion 21 located opposite from each other in X direction, and this helps suppress aging degradation of the electricity storage device 10.

The electricity storage device pack 5 (electricity storage device aggregate) is formed by arraying electricity storage devices 10 in the depth direction (Y direction) of the housing portion 16, and the dimension By of the electricity storage device pack 5 in Y direction is larger than its dimension Bz in Z direction. It is thus possible to reduce the height of the electricity storage device pack 5 and to obtain the desired electric power.

The electricity storage device pack 5 is mounted in a single tier in the height direction of the electric vehicle 1, and this helps enhance the interior comfort of the electric vehicle 1.

### < Second Embodiment >

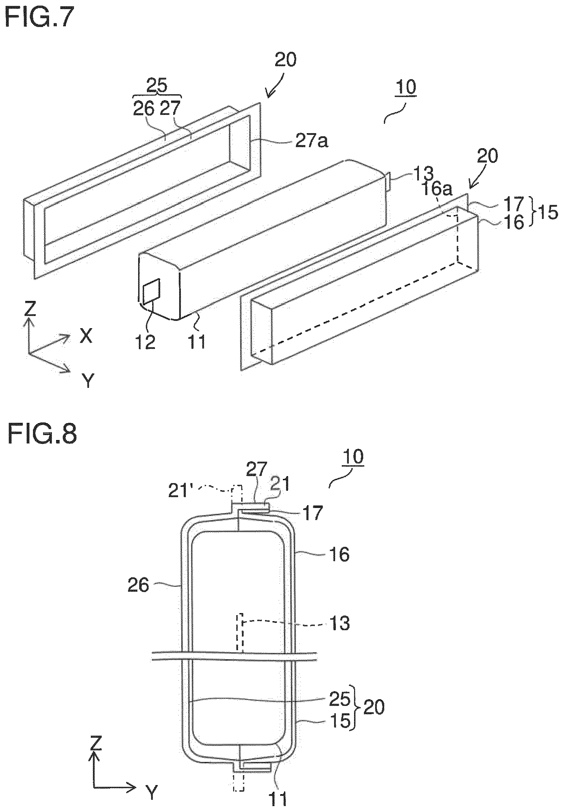

Figs. 7 and 8 are an exploded perspective view and a sectional side view, respectively, of an electricity storage device 10 according to a second embodiment. For the sake of convenience, such parts as find their counterparts in the first embodiment shown in Figs. 1 to 6 referred to previously are identified by the same reference signs. This embodiment differs from the first embodiment in the shape of the packing material 25, and is in other respects similar to the first embodiment.

The packing material 25, like the packing material 15, has a housing portion 26 and a flange portion 27. The housing portion 26 has a substantially rectangular opening 26a open in one face. The electricity storage element 11 is accommodated in the housing portion 16 in the packing material 15 and the housing portion 26 in the packing material 25. The flange portion 27 is formed in an annular shape protruding outward from the circumferential edge of the opening 26a.

The thermal adhesive resin layers 38 (see Fig. 6) of the flange portions 17 and 27 are thermally bonded together to form an annular peripheral seal portion 21 along the circumference of the housing portions 16 and 26. Thus, the housing portions 16 and 26 formed with a predetermined depth from the inner edge of the peripheral seal portion 21 are sealed by the peripheral seal portion 21.

Parts of the peripheral seal portion 21 that extend in X direction protrude in Z direction as indicated by dash-and-dot lines 21' during thermal bonding; after thermal bonding, those parts are bent to overlap the circumferential wall of the housing portion 16 or 26.

The electricity storage device 10 is mounted such that the depth direction (Y direction) of the housing portions 16 and 26 is aligned with the front-rear direction of the electric vehicle 1; and such that, of the housing portions 16 and 26 as seen on a plane orthogonal to its depth direction, the longer-side direction (X direction) is aligned with the left-right direction of the electric vehicle 1 and the shorter-side direction (Z direction) is aligned with the height direction of the electric vehicle 1.

It is thus possible to achieve similar benefits as in the first embodiment. Moreover, owing to the packing materials 15 and 25 having the housing portions 16 and 26 respectively, it is possible to increase the volume of the electricity storage element 11 and thereby increase the capacity of the electricity storage device 10. It is thus possible to reduce the number of electricity storage devices 10 that constitute the electricity storage device pack 5 (see Fig. 3), and to reduce the man hours for manufacturing the electricity storage device pack 5.

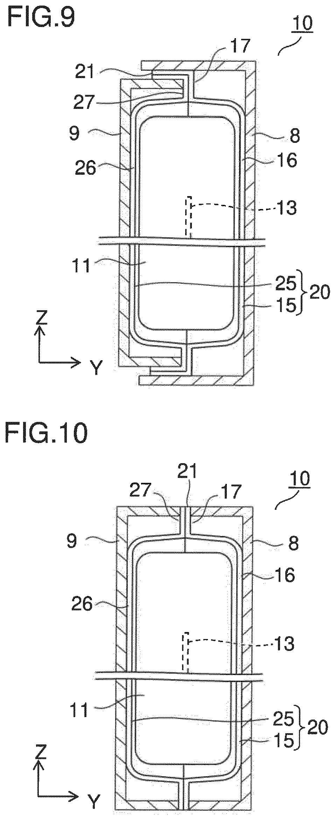

As shown in Fig. 9, the electricity storage device 10 may be covered by protective covers 8 and 9. The protective covers 8 and 9 are formed, by injection molding, in a bottomed cylindrical shape with a rectangular sectional shape with an opening open in one face. The protective cover 9 is given an exterior shape smaller than the opening in the protective cover 8.

A part of the peripheral seal portion 21 that protrudes in a peripheral part of the outer package member 20 is bent to overlap the circumferential wall of the protective cover 9, and the protective cover 8 is fitted in the protective cover 9 along the peripheral seal portion 21. Thus, the peripheral seal portion 21 is bent at a position away from the circumferential edge of the openings 16a and 26a (see Fig. 7) in the housing portions 16 and 26. This helps reduce cracks and pinholes resulting from the peripheral seal portion 21 being bent.

Fig. 10 shows an electricity storage device 10 covered by protective covers 8 and 9 that are shaped differently from those in Fig. 9. The protective covers 8 and 9 are formed, by injection molding, substantially in the identical shape, and are formed in a bottomed cylindrical shape with an opening open in one face. The electricity storage device 10 does not require the bending process, and the protective covers 8 and 9 are fixed with a part the peripheral seal portion 21 protruding in a peripheral part of the outer package member 20, held between the circumferential walls of the protective covers 8 and 9. Thus, the peripheral seal portion 21 is protected. Eliminating the bending process helps reduce cracks and pinholes resulting from the peripheral seal portion 21 being bent.

Also with the electricity storage device 10 of the first embodiment, the outer package member 20 may be covered by similar protective covers 8 and 9.

### < Third Embodiment >

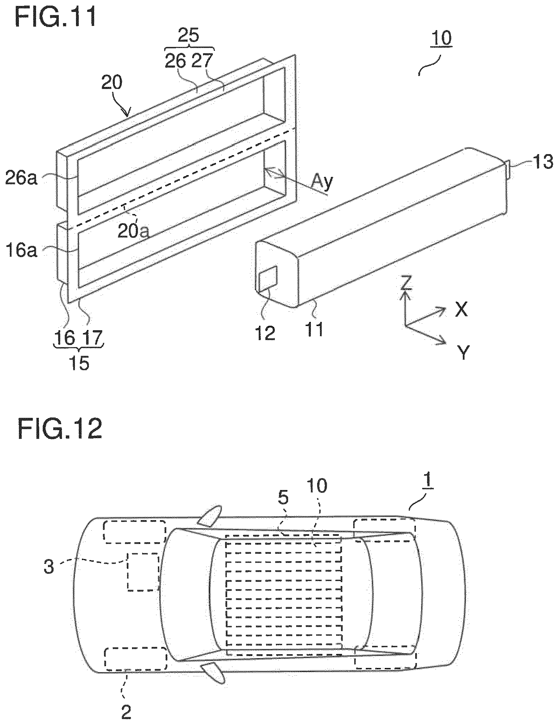

Fig. 11 is an exploded perspective view of an electricity storage device 10 according to a third embodiment. For the sake of convenience, such parts as find their counterparts in the second embodiment shown in Fig. 7 and 8 referred to previously are identified by the same reference signs. In this embodiment, the packing materials 15 and 25 are formed as a unitary member. In other respects, this embodiment is similar to the second embodiment.

The outer package member 20 has the packing material 15, with the housing portion 16, and the packing material 25, with the housing portion 26, formed unitarily so as to be continuous in Z direction. The flange portion 17 of the packing material 15 and the flange portion 27 of the packing material 25 are formed to be flush across a folding line 20a.

After the electricity storage element 11 is accommodated in the housing portion 16 or 26, the outer package member 20 is bent along the folding line 20a, which extends in X direction. Then the flange portions 17 and 27 facing each other are thermally bonded together to form the peripheral seal portion 21.

With this embodiment, it is possible to achieve similar benefits as in the second embodiment. In addition, owing to the packing materials 15 and 25 being formed as a unitary member, it is possible to reduce the number of parts of the electricity storage device 10.

In this embodiment, the openings 16a and 26a may be formed close to each other so that the folding line 20a runs along the circumferential edges of the openings 16a and 26a. This permits the bottom face of the electricity storage device 10 to be formed flat. It is thus possible to enhance the closeness of contact between the electricity storage device 10 and the mounting surface on which it is mounted, and thereby to enhance heat rejection from the electricity storage device 10.

Also in the first and second embodiments, the packing materials 15 and 25 may be formed as a unitary member that is continuous across a folding line at the bottom end.

### < Fourth Embodiment >

Fig. 12 is a top view of an electric vehicle 1 according to a fourth embodiment. For the sake of convenience, such parts as find their counterparts in the first embodiment shown in Figs. 1 to 6 referred to previously are identified by the same reference signs. In this embodiment, the electricity storage device pack 5 is arranged differently than in the first embodiment. In other respects, this embodiment is similar to the first embodiment.

The electricity storage device pack 5 is mounted beneath the floor of the electric vehicle 1 such that the array direction of electricity storage devices 10 is aligned with the left-right direction of the electric vehicle 1. Thus, the electricity storage device 10 is arranged such that the depth direction (Y direction) of the housing portion 16 (see Fig. 4) is aligned with the left-right direction of the electric vehicle 1, and such that, of the housing portion 16 as seen on a plane perpendicular to its depth direction, the longer-side direction (X direction, first direction) is aligned with the front-rear direction of the electric vehicle 1 and the shorter-side direction (Z direction, second direction) is aligned with the height direction of the electric vehicle 1. That is, X direction, which is orthogonal to the depth direction of the housing portion 16, is aligned with the front-rear direction of the electric vehicle 1, and Z direction, which is orthogonal to the depth direction of the housing portion 16 and to X direction, is aligned with the height direction of the electric vehicle 1.

It is thus possible, without stacking a plurality of electricity storage device 10, to mount them in the electric vehicle 1 to supply it with the desired electric power. Accordingly, it is possible to achieve similar benefits as in the first embodiment. In addition, when the electric vehicle 1 is driving, the air taken in through the front grille at the front passes rearward and makes contact with the individual electricity storage devices 10 in the electricity storage device pack 5. It is thus possible to cool the electricity storage devices 10.

The electricity storage device 10 of the second or third embodiment may be mounted in the electric vehicle 1 such that the array direction of electricity storage devices 10 is aligned with the left-right direction of the electric vehicle 1.

While in the first to fourth embodiments the housing portions 16 and 26 are given a substantially rectangular shape on a sectional plane perpendicular to Y direction, they may be given any other shape there, such as an elongate-circular, elliptical, or polygonal shape.

The outer package case 6 of the electricity storage device pack 5 may be mounted on a mount member with a temperature control function. For example, the mount member can be formed of a metal plate in order to reject heat from the electricity storage device pack 5 and thereby suppress a rise in the temperature of the electricity storage device 10. Here, water may be circulated through the mount member. In a case where the electricity storage device 10 is an all solid battery or the like, the mount member may be provided with a heater so that the heater is turned on and off to keep the electricity storage device 10 at an appropriate temperature.

The outer package case 6 of the electricity storage device pack 5 may be mounted on a mount member formed of a liquid absorbent material. For example, the mount member can be formed of unwoven cloth so that, if the electrolytic solution leaks out of the electricity storage device pack 5, the mount member absorbs it.

While in the embodiments the electricity storage device 10 that supplies the driving motor 3 with electric power is a secondary battery, it may instead be a capacitor (electrolytic capacitor, electrical double layer capacitor, lithium-ion capacitor, or the like).

### Industrial Applicability

The present invention finds wide application in electric vehicles furnished with electricity storage devices.

### Reference Signs List

- 1: electric vehicle
- 2: wheel
- 3: driving motor
- 5: electricity storage device pack
- 6: outer package case
- 10: electricity storage device
- 11: electricity storage element
- 12, 13: electrode terminal
- 15, 25: packing material
- 16, 26: housing portion
- 16a, 26a: opening
- 17, 27: flange portion
- 20: outer package member
- 20a: folding line
- 21: peripheral seal portion
- 34: base layer
- 36: barrier layer
- 38: thermal adhesive resin layer

## Claims

1. An electricity storage device having an electricity storage element sealed in an outer package member formed of a laminate having a thermal adhesive resin layer, the electricity storage device being mounted as a driving source in an electric vehicle, wherein
the outer package member includes:
a peripheral seal portion; and
a housing portion formed with a predetermined depth from an inner edge of the peripheral seal portion, for accommodating therein the electricity storage element,
a depth direction of the housing portion and a first direction orthogonal to the depth direction of the housing portion are aligned with a front-rear direction and a left-right direction of the electric vehicle, and
a second direction orthogonal to the depth direction of the housing portion and to the first direction is aligned with a height direction of the electric vehicle.

2. The electricity storage device according to claim 1, wherein
a dimension of the housing portion in the first direction is larger than a dimension of the housing portion in the second direction.

3. The electricity storage device according to claim 2, wherein
the dimension of the housing portion in the first direction is twice to 30 times the dimension of the housing portion in the second direction.

4. The electricity storage device according to any one of claims 1 to 3, wherein
a part of the peripheral seal portion extending in the first direction is bent to overlap a circumferential wall of the housing portion.

5. The electricity storage device according to claim 4, wherein
a machine direction of the outer package member is orthogonal to the first direction.

6. The electricity storage device according to any one of claims 1 to 5, wherein
the electricity storage element has a first electrode terminal and a second electrode terminal, and
the first and second electrode terminals protrude from parts of the peripheral seal portion extending in the second direction.

7. The electricity storage device according to claim 6, wherein
the first electrode terminal protrudes from one of parts of the peripheral seal portion located opposite from each other in the first direction, and
the second electrode terminal protrudes from another of the parts of the peripheral seal portion located opposite from each other in the first direction.

8. An electricity storage device aggregate having a plurality of the electricity storage devices according to any one of claims 1 to 7 arrayed in the depth direction of the housing portion and accommodated in an outer package case, the electricity storage device aggregate being mounted in an electric vehicle, wherein
a dimension of the electricity storage device aggregate in a direction in which the plurality of electricity storage devices are arrayed is larger than a dimension of the electricity storage device aggregate in the second direction.

9. The electricity storage device aggregate according to claim 8, wherein
a dimension of the electricity storage device aggregate in the first direction is larger than the dimension of the electricity storage device aggregate in the direction in which the plurality of electricity storage devices are arrayed.

10. The electricity storage device aggregate according to claim 8 or 9, further comprising a mount member on which the outer package case is mounted, wherein
the mount member has a temperature control function.

11. The electricity storage device aggregate according to claim 8 or 9, further comprising a mount member on which the outer package case is mounted, wherein
the mount member is formed of a liquid absorbent material.

12. An electric vehicle, comprising:
the electricity storage device aggregate according to any one of claim 8 to 11;
a driving motor supplied with electric power from the electricity storage device aggregate; and
a wheel driven by the driving motor,
wherein the electricity storage device aggregate is arranged in a single tier in a height direction in a bottom part of a vehicle chassis.

13. An outer package member for an electricity storage device, for sealing therein an electricity storage element of an electricity storage device to be mounted as a driving source in an electric vehicle, the outer package member being a laminate having a thermal adhesive resin layer and comprising:
a housing portion having an opening open in one face thereof to have a predetermined depth, for accommodating therein the electricity storage element; and
a flange portion protruding outward from a circumferential edge of the opening,
a dimension of the housing portion in a predetermined first direction on a plane perpendicular to a depth direction of the housing portion is larger than a dimension of the housing portion in a second direction orthogonal to the first direction, and
a machine direction of the laminate is orthogonal to the first direction.

14. The electricity storage device outer package member according to claim 13, wherein
the dimension of the housing portion in the first direction is twice to 30 times the dimension of the housing portion in the second direction.

15. A method of manufacturing an electricity storage device to be mounted as a driving source in an electric vehicle, the method comprising:
a preparation step of preparing an outer package member having a housing portion with a laminate having a thermal adhesive resin layer; and
a packing step of packing in the outer package member an electricity storage element accommodated in the housing portion,
wherein
a depth direction of the housing portion and a first direction orthogonal to the depth direction of the housing portion are aligned with a front-rear direction and a left-right direction of the electric vehicle,
a second direction orthogonal to the depth direction of the housing portion and to the first direction is aligned with a height direction of the electric vehicle, and
a dimension of the housing portion in the first direction is larger than a dimension of the housing portion in the second direction.

16. The method according to claim 15, wherein
the dimension of the housing portion in the first direction is twice to 30 times the dimension of the housing portion in the second direction.

17. The method according to claim 15 or 16, wherein
the packing step includes:
forming in a peripheral part of the outer package member a peripheral seal portion for sealing the outer package member by thermal bonding with the thermal adhesive resin layer; and
bending a part of the peripheral seal portion extending in the second direction such that the part overlaps a circumferential wall of the housing portion.

18. The method according to claim 17, wherein
the first direction is orthogonal to a machine direction of the outer package member.
